(19) Europäisches Patentamt
European Patent Office
Office européen des brevets

(11) Veröffentlichungsnummer: **0 524 528 B1**

(12) **EUROPÄISCHE PATENTSCHRIFT**

(45) Veröffentlichungstag der Patentschrift: **15.03.95**

(51) Int. Cl.[6]: **C10M 171/00**, C09C 3/08, C09C 3/12, C09C 1/30, C09C 1/40

(21) Anmeldenummer: **92112000.2**

(22) Anmeldetag: **14.07.92**

(54) **Elektrorheologische Flüssigkeit.**

(30) Priorität: **24.07.91 DE 4124579**

(43) Veröffentlichungstag der Anmeldung:
**27.01.93 Patentblatt 93/04**

(45) Bekanntmachung des Hinweises auf die Patenterteilung:
**15.03.95 Patentblatt 95/11**

(84) Benannte Vertragsstaaten:
**DE ES FR GB IT SE**

(56) Entgegenhaltungen:
**WO-A-90/02779**
**GB-A- 1 076 754**
**US-A- 4 744 914**

**JAPANESE PATENTS ABSTRACTS (EXAMINED) Section Ch, Week 9004, DerwentPublications Ltd., London, GB; Class A97, AN AN90-026313**

(73) Patentinhaber: **METZELER GIMETALL AG**
**Gneisenaustrasse 15**
**D-80992 München (DE)**

(72) Erfinder: **Michel, Werner, Dr.**
**Heideweg 42**
**W-8080 Fürstenfeldbruck (DE)**

(74) Vertreter: **Seibert, Hannelore et al**
**Seibert + Michelis,**
**Rechtsanwälte und Patentanwälte,**
**Tattenbachstrasse 9**
**D-80538 München (DE)**

EP 0 524 528 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

PATENT ABSTRACTS OF JAPAN vol. 13, no. 328 (C-621)(3676) Juli 1989CHEMICAL ABSTRACTS, vol. 112, no. 26, 25. Juni 1990, Columbus, Ohio, US;abstract no. 237718j, V.A.KASPERSKII 'manifacture of powdered boron-containingsilica' Seite 140 ;

Chemical Abstracts, vol. 112, no 26, 25.Juni 1990, Columbus,Ohio, US Abstract no 237718j VA KASPERSKII:manifacture of powdered boron-containing silicia, Seite 140

WORLD SURFACE COATINGS ABSTRACTS, Bd. 60, Nr. 539, Mai 1987, OXFORD GB Seiten 690-691 E TSUCHIYA, *abstract 87/03447*

## Beschreibung

Die vorliegende Erfindung bezieht sich auf eine elektrorheologische Flüssigkeit nach dem Oberbegriff von Patentanspruch 1 und ein Verfahren zu deren Herstellung.

Es ist bekannt, daß in elektrorheologischen Flüssigkeiten die Viskosität unter dem Einfluß eines elektrischen Feldes merklich ansteigt. Diese wichtige Eigenschaft ist umkehrbar und macht solche Flüssigkeiten besonders nützlich für Vorrichtungen, bei denen eine unmittelbare und wieder lösbare Blockierung eintreten muß, wie beispielsweise in Kupplungen und bei Stoßdämpfern.

Solche elektrorheologischen Flüssigkeiten bestehen im wesentlichen aus (i) einer im wesentlichen nichtleitenden Flüssigkeit mit einer Dielektrizitätskonstanten unter 10, (ii) einer festen Phase, die gewöhnlich aus Siliziumdioxid oder einem Silikat besteht und fast immer auch (iii) mindestens einem Zusatz von oberflächenaktiven Substanzen und Dispersionsmitteln.

Aus Japanese Patent Abstracts, Derwent Publications Ltd., AN90-026313 ist eine elektrorheologische Flüssigkeit der eingangs genannten Art bekannt. Die bekannte elektrorheologische Flüssigkeit besteht aus einer im wesentlichen nichtleitenden Flüssigkeit mit einer Feststoffphase aus Partikeln eines siliziumhaltigen Materials. Als Feststoffe werden $SiO_2$ (Siliziumdioxid, Silica) sowie Aluminiumoxid, Zirkonoxid und Antimonoxid vorgeschlagen. Die Feststoffphase ist mit einer siliziumenthaltenden Verbindung modifiziert. Hierbei hat die Verbindung die Form $x\text{-}Si\text{-}(OR)_3$. Bei diesen Silanverbindungen handelt es sich um relativ kurzkettige Modifizierungsmittel, die im Vergleich zu unbehandelten Feststoffen eine schnellere Sedimentation bewirken, da die unbehandelten Feststoffe in Silikonöl flokkulationsstabilisiert sind.

Weitere Beispiele für derartige elektrorheologische Flüssigkeiten sind in der US-3 047 507, US-4 668 417, US-4 702 855, US-4 744 914, GB-076 754 und EP-B-0 170 939 beschrieben.

Die bekannten elektrorheologischen Flüssigkeiten haben den Nachteil, daß die feste Phase dazu neigt, sich mit der Zeit abzusetzen und/oder daß die Anwendung einer höheren Leistung erforderlich ist und/oder daß sich ihr Ansprechvermögen auf ein elektrisches Feld merklich und irreversibel ändert, wenn sie auf eine Temperatur von mehr als 100 °C erhitzt werden. Weiterhin besitzen verschiedene der bekannten elektrorheologischen Flüssigkeiten, wie beispielsweise die nach der US-4 744 914, eine zu starke Abriebwirkung.

Aufgabe der Erfindung ist es, eine elektrorheologische Flüssigkeit bereitzustellen, die bessere Gesamteigenschaften besitzt und bei der insbesondere die Absetzneigung der festen Phase reduziert ist.

Zur Lösung dieser Aufgabe wird eine elektrorheologische Flüssigkeit mit den Merkmalen des Patentanspruches 1 vorgeschlagen. Bei der erfindungsgemäßen elektrorheologischen Flüssigkeit liegt das siliziumhaltige Material als Zeolith oder amorphes Natriumaluminiumsilikat vor.

Das Verfahren zur Herstellung der festen Phase der elektrorheologischen Flüssigkeit sieht vor, daß

- fein verteilte Partikel eines siliziumhaltigen Grundmaterials mit Ausnahme von Phyllosilikaten in einer geeigneten Flüssigkeit suspendiert werden und
- daß man die Oberflächengruppen

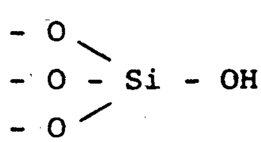

(A)

dieses siliziumhaltigen Grundmaterials bei einer Temperatur zwischen 60 und 300 °C für einen Zeitraum zwischen 24 und 0,5 Stunden mit einer Verbindung reagieren läßt, die Gruppen der allgemeinen Formel

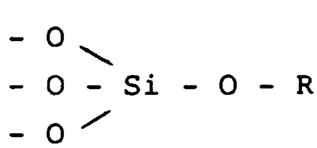

(I A)

bilden kann, wobei R eine Gruppe der Formel

$$\begin{array}{l} \quad OR_1 \\ \quad | \\ -W-R_2 \quad (II\ A) \\ \quad | \\ \quad OR_1 \end{array}$$

oder

$$\begin{array}{l} \quad OR_3 \\ \quad | \\ -W-OR_3 \quad (II\ B) \\ \quad | \\ \quad OR_3 \end{array}$$

oder

$$\begin{array}{l} \quad OR_4 \\ \quad | \\ -B \qquad\qquad (III) \\ \quad | \\ \quad OR_4 \end{array}$$

ist, worin W entweder Si oder Ti ist,

$R_1$ ein geradlinig oder verzweigtes $C_1$-$C_4$ Alkyl,

$R_2$ eine Gruppe der Formel

$$\begin{array}{l} -(CH_2)_x-CH-CO-Y'-R' \\ \qquad\qquad \backslash \\ \qquad\qquad CH_2-CO-Y''-R'' \end{array}$$

worin x eine ganze Zahl zwischen 1 und 9 ist;

R' und R'' können gleich oder verschieden sein und sind ausgewählt aus der Gruppe Wasserstoff, $C_5$-$C_{20}$ Alkyl, $C_5$-$C_{20}$ Alkenyl und $-(C_2H_4O)_x$-$C_6H_5$-$C_{7-11}$Alkyl, wobei x die gleiche Bedeutung hat, wie vorstehend erwähnt;

Y' und Y'' können gleich oder verschieden sein und O, NH oder NR''' bedeuten, wobei R''' eine Gruppe der Formel

$$-(CH_2)_y-\underset{(R_1)_2}{Si}-O-(\underset{(R_1)_2}{Si})_n-\underset{(R_1)_2}{Si}-(CH_2)_z-NH-C_{3-9}\ \mathbf{Alkyl}$$

ist, wobei $R_1$ die vorstehend erwähnte Bedeutung hat; und

wobei y und z gleich oder verschieden sein können und ganze Zahlen zwischen 1 und 9 sind, und wobei n eine ganze Zahl zwischen 10 und 30 ist;

$R_3$ eine Gruppe der Formel $C_nH_{2n+1}$-COO darstellt,

worin n die obenstehende Bedeutung besitzt,

$R_4$ eine Gruppe der Formel

$$\begin{array}{l} \quad CH_2-O-CO-R_5 \\ \quad | \\ -CH \\ \quad | \\ \quad CH_2-O-H \end{array}$$

wobei $R_5$ aliphatisches $C_{7-20}$ Alkyl oder $C_{7-20}$ Alkenyl bedeutet, ist und B Bor bedeutet.

Die Umsetzung soll vorzugsweise in der Strömung eines Schutzgases, z.B. Stickstoff, im geschlossenen Reaktionsgefäß stattfinden, das mit einem Kondensator und Schaufelrührwerk ausgerüstet ist.

Das siliziumhaltige Grundmaterial besteht vorzugsweise aus synthetischem Zeolith mit einem Wassergehalt zwischen 0,5 und 30%, vorzugsweise zwischen 0,5 und 10%. Der Wassergehalt wird nach bekannten Methoden bestimmt, vorzugsweise durch Messung des Gewichtsverlustes beim Erhitzen auf 600 °C.

Der mittlere Durchmesser der Zeolithpartikel soll vorzugsweise zwischen 0,5 und 50 Mikron liegen.

Als Flüssigkeit, in der die Reaktion erfolgen soll, verwendet man zweckmäßigerweise die gleiche Flüssigkeit, die in der angestrebten elektrorheologischen Flüssigkeit als Grundflüssigkeit dient, nämlich Silikonöl oder Mineralöl. Das bei der Reaktion entstehende Produkt ist die erfindungsgemäße elektrorheologische Flüssigkeit, wobei lediglich eventuell zur Erzielung des erwünschten Verhältnisses zwischen flüssiger und fester Phase Flüssigkeit zugefügt oder entzogen werden muß. (Hilfs-)Flüssigkeiten können beispielsweise Benzin, Toluol, Ethylacetat, Methylethylketon, Terahydrofuran sein. Falls die Flüssigkeit, in der die Reaktion stattfindet, nicht als flüssige Phase der elektro-rheologischen Flüssigkeit erwünscht ist, wird sie daraus mit herkömmlichen Verfahren entfernt, wie z.B. durch Destillation oder durch Filtrieren. Im letzteren Falle erhält man ein festes Produkt, das im wesentlichen aus Partikeln des fein verteilten siliziumhaltigen Materials besteht, dessen Oberfläche erfindungsgemäß abgewandelt ist. Es genügt dann, dieses feste Produkt in der gewünschten Flüssigkeit zu dispergieren, um die erfindungsgemäße elektro-rheologische Flüssigkeit zu erhalten. Das Dispergieren erfolgt vorzugsweise in einem Intensivmischer vom Typ Zahnscheiben-Dissolver oder Zahnkranz-Rührwerk für die Dauer von 10 bis 60 Minuten.

Die im wesentlichen nichtleitende Flüssigkeit wählt man vorzugsweise aus dem Bereich von Flüssigkeiten, die als zur Herstellung elektrorheologischer Flüssigkeiten geeignet bekannt sind, mit einer Dielektrizitätskonstanten zwischen 1,8 und 10 und einer Viskosität zwischen 1 und 500 mPa.s aus. Beispiele für solche Flüssigkeiten sind paraffinische und naphthenische Mineralöle, Silikonöle und deren Derivate. Falls ihre Dielektrizitätskonstante und ihre Viskosität im vorstehend erwähnten Bereich liegt, können auch Äther, Ester, Ketone, Aldehyde, Amine, Thiole und Thioester Verwendung finden.

Zur weiteren Verringerung der Abriebwirkung der Partikel des fein verteilten, siliziumhaltigen Materials mit einer erfindungsgemäß abgewandelten Oberfläche kann der elektrorheologischen Flüssigkeit feinteiliges Polytetrafluorethylen, Molybdänsulfid und/oder Graphit zugefügt werden.

Die Bestimmung der elektrorheologischen Eigenschaften wurde in einem Couette-Rotationsviskosimeter durchgeführt, abgewandelt durch angemessene Elektroisolierung und elektrische Anschlüsse zur Anwendung eines elektrischen Feldes über den Meßspalt während der Rotation.

Sofern nicht anders angegeben, wurden die Messungen bei 25 °C, einer Schergeschwindigkeit von 200 $s^{-1}$ und unter Anwendung eines elektrischen Feldes mit Gleichspannung von 1000 Volt pro mm durchgeführt.

Die Bewertung des Verhaltens der erfindungsgemäßen elektrorheologischen Flüssigkeiten erfolgte auf der Grundlage der Viskosität, ausgedrückt in mPa.s, gemessen ohne elektrisches Feld und mit einem Bewertungskoeffizienten q, der nach folgender Formel berechnet wurde:

$$q = a.F/I.U$$

wobei

- F = Halbfläche der Elektrode,
- I = gemessene Stromstärke,
- U = Spannung über dem Meßspalt,
- a = relative Schubspannung, d.h. Meßwert in Gegenwart des elektrischen Feldes dividiert durch den Meßwert ohne elektrisches Feld, vermindert um 1.

Somit stellt "a" den Teil der Schubspannung dar, der dem Einfluß des elektrischen Feldes zuzuschreiben ist und wird auch als "relative Viskosität" bezeichnet.

Dividiert man die Größe "a" durch die elektrische Leistung pro Flächeneinheit, $I.U.m^{-2}$, so erhält man den Bewertungskoeffizienten "q" der mit zunehmenden Werten von "a" und mit fallender elektrischer Leistungsaufnahme ansteigt.

Der Koeffizient q kann deshalb auch als Maß für die Qualität des elektrischen Verhaltens einer elektrorheologischen Flüssigkeit betrachtet werden. "q" kann von 0 bis zu sehr hohen Werten variieren.

Die nachstehenden Abkürzungen werden in den folgenden Beispielen verwendet:

- Feststoff 1 ist ein Zeolith-A, auf Na-Basis mit einer Fläche von ca. $5m^2/g$;
- Feststoff 2 ist ähnlich wie Feststoff 1, enthält aber 9% Calciumionen;
- Feststoff 3 ist ähnlich wie Feststoff 1, enthält aber 3,7% Lithiumionen;
- Feststoff 4 ist ein amorphes NaAl-Silikat mit einer Oberfläche von 90 $m^2/g$, das 9% Aluminium oxid, 7% Natriumoxid und 7% Wasser enthält;
- Öl 1 ist ein Polydimethylsiloxan mit Trimethyl silyl-Endgruppen, mit einer Viskosität von 10 mPa.s bei 25 °C;
- Öl 2 ist ähnlich wie Öl 1, besitzt aber eine Viskosität von 5 mpa.s bei 25 °C;
- Öl 3 ist ein Polydimethylsiloxan mit Dialkylamin-Substitution durch 7,7% Cyclohexylaminomethylgruppen, mit einer Viskosität von 155 mPa.s bei 25 °C;

Öl 4 ist ein Mineralöl mit ca. 11% aromatischen Kohlenwasserstoffen, ca. 33% naphthenischen Kohlenstoffen und ca. 56% paraffinischen Kohlenwasserstoffen, mit einer Viskosität von 15-20 mPa.s bei 25 °C und einem Schmelz punkt von -18 °C;

Öl 5 ist ein naphthenisches Mineralöl mit einer Viskosität von 7-11 mPa.s bei 40 °C und einem Schmelzpunkt zwischen -45 °C und -54 °C;

Silan 1 ist (3-Triethoxysilyl-propyl)-bernstein säureanhydrid.

Die folgenden Beispiele dienen zur Veranschaulichung der Erfindung, sind aber keinesfalls als Einschränkung aufzufassen.

| Zwischenstufen 1 - 6 | | |
|---|---|---|
| | 1 | 2 |
| Silan 1 | 5,0 | 31,0 |
| Öl 3 | 87,5 | - |
| Dodecylamin | - | 40,0 |
| Öl 2 | 92,5 | 71,0 |
| | 185,0 | 142,0 |
| Viskosität (mPa.s/25 °C) | 280 | nicht gemessen, da nach Reaktion die Trennung in zwei Phasen erfolgte. |

Alle Mengen sind in Gramm angegeben.

Die Reaktion fand in einem dreihalsigen Glaskolben mit Rückfluß- und Destillatkühler unter Rühren statt. Der Fortschritt der Reaktion wurde mittels IR-Spektroskopie verfolgt. Die Zunahme des Molekulargewichts wurde anhand des Viskositätsanstiegs und der Elimination des Ethanols im Verlauf der Reaktion beurteilt.

Als Reaktionszeit wurden 4 Stunden bei einer Temperatur von 125 °C gewählt.

Das Öl 2 hat lediglich die Funktion eines Verdünnungsmittels.

Bei der Vorbereitung der Zwischenstufe 1 besaß das Verhältnis zwischen den Carboxylgruppen und den Amingruppen und Alkoholen einen Ausgangswert von 1:1, während dieses Verhältnis bei der Zwischenstufe 2 einen Ausgangswert von 2:1 hatte.

In analoger Weise wurden die folgenden Zwischenstufen hergestellt:

| | 3 | 4 | 5 | 6 |
|---|---|---|---|---|
| Silan I | 45,0 | 62,0 | 49,0 | 30,5 |
| Dodecylamin | 55,0 | 38,0 | - | - |
| Dodecanol | - | - | 51,0 | - |
| Nonylphenyl-Hexaethoxylat | - | - | - | 69,5 |
| Öl 5 | 100,0 | 100,0 | 100,0 | 100,0 |
| | 200,0 | 200,0 | 200,0 | 200,0 |
| Viskosität (mPa.s/25 °C) | 98 | 90 | 33 | 65 |

Alle Mengenangaben in Gramm.

Das Öl 5 hat lediglich die Funktion eines Verdünnungsmittels.

Die Reaktionsprodukte bildeten mit dem Öl homogene Lösungen und wurden als solche zu elektrorheologischen Flüssigkeiten weiterverarbeitet. Bei den Zwischenstufen 3, 5 und 6 betrug das Verhältnis zwischen den Carboxylgruppe und den Aminogruppen und Alkoholen von 1:1, während dieses Verhältnis bei der Zwischenstufe 2 einen Ausgangswert von 2:1 besaß.

Beispiele 1 bis 13

Die Mengen der verschiedenen Bestandteile sind in Gewichtsprozent angegeben.

Die mit einer Ziffer gekennzeichneten Ausführungsbeispiele beziehen sich auf erfindungsgemäße elektrorheologische Flüssigkeiten, die mit einem Großbuchstaben gekennzeichneten Beispiele beziehen sich auf bekannte elektrorheologische Flüssigkeiten, die zum Vergleich dienen. Die Herstellung erfolgte durch Rühren der Bestandteile über eine Zeitdauer von 1 h bei 120 °C (Beispiel A und 1), bzw. 4 h bei 200 °C (Beispiel 2 bis 13 sowie B, C und D).

| | Beispiel A | Beispiel 1 |
|---|---|---|
| Öl 1 | 62,0 | 62,0 |
| Öl 3 | 5,0 | - |
| Feststoff 4 | 33,0 | 33,0 |
| Zwischenstufe I | - | 5,0 |
| Viskosität (mPa.s/25 °C) | 850 | 520 |
| "a" ($m^2$/VA) | 25 | 42 |

| | Beispiele | | | |
|---|---|---|---|---|
| | 2 | 3 | 4 | 5 |
| Öl 1 | 53,0 | 56,0 | - | - |
| Öl 4 | - | - | 56,7 | 52,7 |
| Feststoff 1 (8,2% $H_2O$) | 41,0 | 41,0 | - | - |
| Feststoff 1 (3,5% $H_2O$) | - | - | 42,0 | 42,0 |
| Zwischenstufe 1 | 6,0 | - | - | - |
| Zwischenstufe 2 | - | 3,0 | - | - |
| Zwischenstufe 3 | - | - | 1,3 | 1,3 |
| Formamid | - | - | - | 4,0 |
| Viskosität (mPa.s) | 110 | 140 | 200 | 160 |
| "a" ($m^2$/VA) | 11 | 10 | 4 | 18 |

Die elektrorheologischen Flüssigkeiten der Beispiele 2 bis 5 zeigen nach längerer Lagerung (90 Tage) eine geringfügige Absetzung, die jedoch durch Schütteln oder Rühren leicht wieder redispergiert werden kann.

| | Beispiele | | | |
|---|---|---|---|---|
| | 6 | 7 | 8 | 9 |
| Öl 1 | 49,0 | 46,0 | 46,0 | 46,0 |
| Öl 4 | 5,0 | 5,0 | 5,0 | 5,0 |
| Formamid | 4,0 | 4,0 | 4,0 | 4,0 |
| Feststoff 1 (6,3% $H_2O$) | 42,0 | 42,0 | 42,0 | 42,0 |
| Zwischenstufe 4 | - | 3,0 | - | - |
| Zwischenstufe 5 | - | - | 3,0 | - |
| Zwischenstufe 6 | - | - | - | 3,0 |
| Viskosität (mPa.s/25 °C) | 430 | 1200 | 330 | 550 |
| "a" ($m^2$/VA) | 1,2 | 4,4 | 3,2 | 11 |

Die elektrorheologische Flüssigkeit aus Beispiel 7 hat eine hohe Viskosität, während die aus Beispiel 8 ein gutes Fließverhalten aufweist.

| | Beispiele | | |
|---|---|---|---|
| | B | 10 | 11 |
| Öl 1 | 41,0 | 40,1 | 39,0 |
| Öl 4 | 14,0 | 13,4 | 13,0 |
| Feststoff 1 (4,3% $H_2O$) | 45,0 | 45,0 | 45,0 |
| Borsäureester-Glycerylmonooleat | | 1,5 | 3,0 |
| Viskosität (mPa.s/25 °C) | 550 | 360 | 510 |
| "a" ($m^2$/VA) | 0,06 | 0,3 | 1,4 |

| | Beispiele | | | |
|---|---|---|---|---|
| | C | 12 | D | 13 |
| Öl 2 | 33,5 | 33,0 | 60,0 | 59,0 |
| Öl 3 | 19,8 | 17,8 | 13,0 | 10,5 |
| Feststoff 1 (4,7% $H_2O$) | 42,0 | 42,0 | - | - |
| Feststoff 2 (6% $H_2O$) | - | - | 27,0 | 27,0 |
| Formamid | 4,7 | 4,7 | - | - |
| TSIT | - | 2,5 | - | 3,5 |
| Viskosität (mPa.s/25 °C) | 260 | 250 | 260 | 125 |
| "a" ($m^2$/VA) | 0,3 | 0,6 | 13 | 40 |
| TSIT = Triisostearylisopropyl-Titanat ($C_{57}H_{112}O_7Ti$) | | | | |

Die Flüssigkeit aus dem Vergleichsbeispiel C setzt sich rasch ab und bildet innerhalb von 2 Wochen bereits einen Niederschlag. Die Flüssigkeit aus dem Vergleichsbeispiel D bildet innerhalb eines Monats einen festen Niederschlag. Die erfindungsgemäße Flüssigkeit der Beispiele 12 und 13 zeigen auch nach 3 Monaten noch keinen Niederschlag.

## Patentansprüche

**1.** Elektrorheologische Flüssigkeit, bestehend aus einer im wesentlichen nichtleitenden Flüssigkeit mit einer Feststoffphase aus Partikeln eines siliziumhaltigen Materials mit Ausnahme von Phyllosilikaten, das in seiner Oberfläche modifiziert ist durch Reaktion seiner Oberflächengruppen

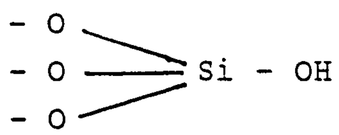

(A)

mit einer geeigneten Verbindung, die Gruppen der allgemeinen Formel

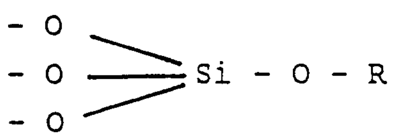

(IA)

bilden kann, dadurch gekennzeichnet, daß das siliziumhaltige Material einen Zeolithen oder amorphes Natriumaluminiumsilikat enthält, wobei R eine Gruppe der Formel

$$-\underset{\displaystyle OR_1}{\overset{\displaystyle OR_1}{W}} - R_2 \qquad (IIA)$$

oder

$$-\underset{\displaystyle OR_3}{\overset{\displaystyle OR_3}{W}} - OR_3 \qquad (IIB)$$

oder

$$-\underset{\displaystyle OR_4}{\overset{\displaystyle OR_4}{B}} \qquad (III)$$

oder

Borsäureester-Glycerylmonooleat (IV)

ist, worin W entweder Si oder Ti ist,

$R_1$ ein geradlinig oder verzweigtes $C_1$-$C_4$ Alkyl,

$R_2$ eine Gruppe der Formel

$$\begin{array}{l} -(CH_2)_x - CH - CO - Y' - R' \\ \qquad\qquad\quad CH_2 - CO - Y'' - R'' \end{array}$$

worin x eine ganze Zahl zwischen 1 und 9 ist;

R' und R" können gleich oder verschieden sein und sind ausgewählt aus der Gruppe Wasserstoff, $C_5$ - $C_{20}$ Alkyl, $C_5$ - $c_{20}$ Alkenyl und - $(C_2H_4O)_x$ - $C_6H_5$ - $C_{7-11}$ Alkyl, wobei x die gleiche Bedeutung hat, wie vorstehend erwähnt;

Y'und Y"können gleich oder verschieden sein und O, NH oder NR" ' bedeuten, wobei R" ' eine Gruppe der Formel

$$-(CH_2)_y-\underset{(R_1)_2}{Si}-O-[\underset{(R_1)_2}{Si}-O]_n-\underset{(R_1)_2}{Si}-(CH_2)_z-NH-C_{3-9}Alkyl$$

ist, wobei $R_1$ die vorstehend erwähnte Bedeutung hat; und wobei y und z gleich oder verschieden sein können und ganze Zahlen zwischen 1 und 9 sind, und wobei n eine ganze Zahl zwischen 10 und 30 ist;

$R_3$ eine Gruppe der Formel $C_nH_{2n+1}$-CO darstellt, worin n die obenstehende Bedeutung besitzt, und

$R_4$ eine Gruppe der Formel

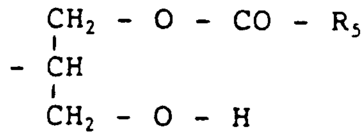

ist, wobei $R_5$ aliphatisches $C_{7-20}$ Alkyl oder $C_{7-20}$ Alkenyl, und B Bor bedeuten.

2. Elektrorheologische Flüssigkeit gemäß Anspruch 1, **dadurch gekennzeichnet,** daß es sich bei dem siliziumhaltigen Grundmaterial um synthetischen Zeolith mit einem Wassergehalt zwischen 0,5 und 30% handelt.

3. Elektrorheologische Flüssigkeit gemäß Anspruch 2, **dadurch gekennzeichnet,** daß der Zeolith einen Wassergehalt zwischen 0,5 und 10% aufweist.

4. Elektrorheologische Flüssigkeit gemäß Anspruch 3, **dadurch gekennzeichnet,** daß der mittlere Durchmesser der Zeolithpartikel zwischen 0,5 und 50 Mikron liegt.

5. Elektrorheologische Flüssigkeit nach einem der vorausgegangenen Ansprüche, **dadurch gekennzeichnet,** daß sie eine im wesentlichen nicht leitende Flüssigkeit mit einer Dielektrizitatskonstanten zwischen 1,5 und 5 und einer Viskosität zwischen 1 und 5 mPa enthält.

6. Elektrorheologische Flüssigkeit nach Anspruch 5, **dadurch gekennzeichnet,** daß sie als nichtleitende Flüssigkeit ein paraffinisches oder naphthenisches Mineralöl, und/oder Siliconöle und/oder deren Derivate enthält.

7. Elektrorheologische Flüssigkeit nach einem der vorangegangenen Ansprüche, **dadurch gekennzeichnet,** daß sie eine abriebverhindernde Substanz enthält.

8. Elektrorheologische Flüssigkeit nach einem der vorangegangenen Ansprüche, **dadurch gekennzeichnet,** daß sie als abriebverhindernde Substanz Graphit in einer Menge bis zu 3 Gew.-%, feinteiliges Polytetrafluorethylen oder Molybdänsulfid in Mengen bis zu 5 Gew.-% enthält.

9. Verfahren zur Herstellung einer elektrorheologischer Flüssigkeit nach einem oder mehreren der Ansprüche 1 bis 8, **dadurch gekennzeichnet,** daß man die Flüssigkeit, in der die Reaktion stattfindet, in an sich bekannter Weise entfernt und den erhaltenen, an der Oberfläche modifizierten Partikel, in der den zweiten Bestandteil der elektrorheolo gischen Flüssigkeit darstellenden, im wesentlichen nicht-leitenden Flüssigkeit, in an sich bekannter Weise suspendiert.

10. Verfahren nach Anspruch 9, **dadurch gekennzeichnet,** daß man die fein verteilten Teilchen eines siliziumhaltigen Grundmaterials in der angegebenen Flüssigkeit unter Rühren bei einer Temperatur zwischen 60 und 300 °C während 0,5 bis 24 Stunden suspendiert, und während dieser Zeit mit der Modifizierungsverbindung in an sich bekannter Weise umsetzt.

## Claims

1. Electrorheological fluid comprising an essentially non-conducting fluid with a solid phase of particles of a silicon-containing material, with the exception of phyllosilicates, which is modified in its surface by reaction of its surface groups

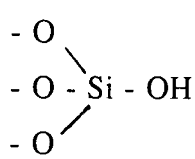

(A)

with a suitable compound which may form groups having the general formula

$$\begin{array}{l} -O \diagdown \\ -O-Si-O-R \\ -O \diagup \end{array} \qquad (IA)$$

characterised in that the silicon-containing material contains a zeolite or amorphous sodium aluminium silicate, where R is a group having the formula

$$\begin{array}{c} OR_1 \\ | \\ -W-R_2 \\ | \\ OR_1 \end{array} \qquad (II\ A)$$

or

$$\begin{array}{c} OR_3 \\ | \\ -W-OR_3 \\ | \\ OR_3 \end{array} \qquad (II\ B)$$

or

$$\begin{array}{c} OR_4 \\ | \\ -B \\ | \\ OR_4 \end{array} \qquad (III)$$

or

boric acid ester-glyceryl monooleate, (IV)

wherein W is either Si or Ti,
$R_1$ is a linear or branched $C_1$-$C_4$ alkyl,
$R_2$ is a group having the formula

$$\begin{array}{l} -(CH_2)_x-CH-CO-Y'-R' \\ \qquad\qquad\quad | \\ \qquad\qquad CH_2-CO-Y''-R'' \end{array}$$

wherein x is a whole number between 1 and 9;
R' and R'' may be the same or different and are chosen from the group comprising hydrogen, $C_5$-$C_{20}$ alkyl, $C_5$-$C_{20}$ alkenyl and $-(C_2H_4O)_x-C_6H_5-C_{7-11}$ alkyl, where x has the same meaning as mentioned above;
Y' and Y'' may be the same or different, and mean O, NH or NR''', where R''' is a group having the formula

$$-(CH_2)_y - \underset{|}{Si}(R_1)_2 - O - [\underset{|}{Si}(R_1)_2-O]_n - \underset{|}{Si}(R_1)_2 - (CH_2)_z - NH - C_{3\text{-}9}\text{ alkyl}$$

where $R_1$ has the meaning mentioned above; and where y and z may be the same or different and are whole numbers between 1 and 9, and where n is a whole number between 10 and 30;
$R_3$ is a group having the formula $C_nH_{2n+1}$-CO wherein n has the meaning given above, and
$R_4$ is a group having the formula

$$\begin{array}{l} CH_2 - O - CO - R_5 \\ | \\ -CH \\ | \\ CH_2 - O - H \end{array}$$

where $R_5$ means aliphatic $C_{7-20}$ alkyl or $C_{7-20}$ alkenyl, and B means boron.

**2.** Electrorheological fluid according to claim 1, characterised in that the silicon-containing base material is a synthetic zeolite with a water content of between 0.5 and 30%.

**3.** Electrorheological fluid according to claim 2, characterised in that the zeolite has a water content of between 0.5 and 10%.

**4.** Electrorheological fluid according to claim 3, characterised in that the mean diameter of the zeolite particles is between 0.5 and 50 micron.

**5.** Electrorheological fluid according to one of the preceding claims, characterised in that it contains an essentially non-conducting fluid with a dielectric constant between 1.5 and 5 and a viscosity between 1 and 5 mPa.

**6.** Electrorheological fluid according to claim 5, characterised in that it contains as non-conducting fluid a paraffinic or naphthenic mineral oil, and/or silicone oils and/or derivatives thereof.

**7.** Electrorheological fluid according to one of the preceding claims, characterised in that it contains an abrasion-inhibiting substance.

**8.** Electrorheological fluid according to one of the preceding claims, characterised in that it contains as abrasion-inhibiting substance graphite in a quantity up to 3% by wt., finely divided polytetrafluoroethylene or molybdenum sulphide in quantities up to 5% by wt.

**9.** A process for the preparation of an electrorheological fluid according to one or more of claims 1 to 8, characterised in that the fluid in which the reaction takes place is removed in an inherently known way and the particle modified at the surface is suspended in an inherently known way in the essentially non-conducting fluid representing the second constituent of the electrorheological fluid.

**10.** A process according to claim 9, characterised in that the finely divided particles of a silicon-containing base material are suspended in the fluid specified, with stirring, at a temperature between 60 and 300 °C for 0.5 to 24 hours and reacted during this period with the modifying compound in an inherently known way.

## Revendications

**1.** Liquide électrorhéologique constitué d'un liquide essentiellement non conducteur ayant une phase de matières solides constituée de particules d'une substance contenant du silicium à l'exception de

phyllosilicate, dont la surface est modifiée par réaction de ses groupes superficiels

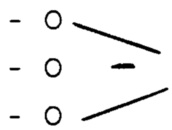 (A)

sur un composé convenable qui peut former les groupes de forme générale

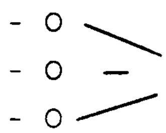 (IA)

caractérisé en ce que la substance contenant du silicium contient un zéolite ou un silicate amorphe de sodium et d'aluminium, R étant un groupe de formule

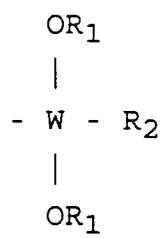 (IIA)

ou

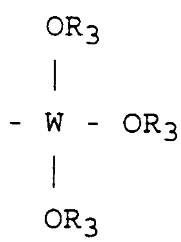 (IIB)

ou

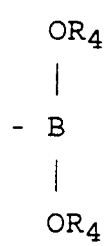 (III)

ou

un ester d'acide borique-monooléate de glcéryle, dans lesquels W est Si ou Ti (IV)

$R_1$ est un alcoyle linéaire ou ramifié ayant de 1 à 4 atomes de carbone,
$R_2$ est un groupe de formule

$$-(CH_2)_x - CH - CO - Y' - R'$$
$$CH_2 - CO - Y'' - R''$$

x étant un nombre entier compris entre 1 et 9;
R' et R'', qui peuvent être identiques ou différents, sont choisis parmi l'hydrogène, alcoyle ayant de 5 à 20 atomes de carbone, alcényle ayant de 5 à 20 atomes de carbone et $(C_2H_4O)_x$ - $C_6H_5$ - alcoyle ayant de 7 à 11 atomes de carbone, x ayant la même signification que celle mentionnée précédemment ;
Y' et Y'', qui peuvent être identiques ou différents, sont O, NH ou NR''', R''' étant un groupe de formule

$$-\ CH_2)_y-\underset{(R_1)_2}{\underset{|}{Si}}-O-[\underset{(R_1)_2}{\underset{|}{Si}}-O]_n-\underset{(R_1)_2}{\underset{|}{Si}}-(CH_2)_z-NH-C_{3-9}\ \text{alcoyle}$$

$R_1$ ayant la signification mentionnée précédemment; y et z, qui peuvent être identiques ou différents, étant des nombres entiers compris entre 1 et 9 et n étant un nombre entier compris entre 10 et 30;
$R_3$ est un groupe de formule $C_nH_{2n+1}CO$,
n ayant la signification mentionnée ci-dessus, et
$R_4$ est un groupe de formule

$$\begin{array}{l} \quad CH_2\ -\ O\ -\ CO\ -\ R_5 \\ \quad\ | \\ -\ CH \\ \quad\ | \\ \quad CH_2\ -\ O\ -\ H \end{array}$$

dans laquelle $R_5$ est alcoyle aliphatique ayant de 7 à 20 atomes de carbone ou alcényle ayant de 7 à 20 atomes de carbone et B est le bore.

**2.** Liquide électrorhéologique suivant la revendication 1, caractérisé en ce que la substance de base contenant du silicium est un zéolite synthétique ayant une teneur en eau comprise entre 0,5 et 30 %.

**3.** Liquide électrorhéologique suivant la revendication 2, caractérisé en ce que le zéolite a une teneur en eau comprise entre 0,5 et 10 %.

**4.** Liquide électrorhéologique suivant la revendication 3, caractérisé en ce que le diamètre moyen des particules de zéolite est compris entre 0,5 et 50 microns.

**5.** Liquide électrorhéologique suivant l'une des revendications précédentes, caractérisé en ce qu'il contient un liquide essentiellement non conducteur ayant une constante diélectrique comprise entre 1,5 et 5 et une viscosité comprise entre 1 et 5 mPa.

**6.** Liquide électrorhéologique suivant la revendication 5, caractérisé en ce qu'il contient comme liquide non conducteur une huile minérale paraffinique ou naphténique et/ou des huiles de silicone et/ou leurs dérivés.

**7.** Liquide électrorhéologique suivant l'une des revendications précédentes, caractérisé en ce qu'il contient une substance empêchant l'abrasion.

**8.** Liquide électrorhéologique suivant l'une des revendications précédentes, caractérisé en ce qu'il contient comme substance empêchant l'abrasion du graphite en une quantité allant jusqu'à 3 % en poids, du polytétrafluoroéthylène finement divisé ou du sulfure de molybdène en des quantités allant jusqu'à 5 % en poids.

**9.** Procédé de préparation d'un liquide électrorhéologique suivant l'une ou plusieurs des revendications 1 à 8, caractérisé en ce qu'il consiste à éliminer, d'une manière en soi connue, le liquide dans lequel a

lieu la réaction et à mettre, d'une manière en soi connue, en suspension les particules obtenues et modifiées en surface dans le liquide essentiellement non conducteur représentant le deuxième constituant du liquide électrorhéologique.

**10.** Procédé suivant la revendication 9, caractérisé en ce qu'il consiste à mettre les particules à l'état finement divisé d'une substance de base contenant du silicium en suspension dans le liquide indiqué, en brassant à une température comprise entre 60 et 300 °C pendant 0,5 à 24 heures, et à faire réagir, d'une manière en soi connue, pendant cette durée sur le composé modifiant.